# EUROPEAN PATENT APPLICATION

(11) **EP 1 223 509 A2**
(43) Date of publication of application: **17.07.2002**
(21) Application number: 01310606.7
(22) Date of filing: 19.12.2001
(51) Int. Cl.: G06F 9/445

(54) **Uninstall control apparatus which controls uninstallation of device control software**

(30) Priority: 26.12.2000 JP 2000396291
(71) Applicant: MATSUSHITA ELECTRIC INDUSTRIAL CO., LTD., Kadoma-shi, Osaka 571-8501 (JP)
(72) Inventor: Kusudo, Tadao, Osaka-shi, Osaka-fu 547-0005 (JP); Watanabe, Shigeaki, Kyoto-shi, Kyoto-fu 607-8452 (JP); Mimura, Yoshihiro, Edinburgh EH4 1PQ, Scotland (GB); Hayama, Satoru, Kobe-shi, Hyogo-ken 658-0062 (JP)
(74) Representative: Crawford, Andrew Birkby

(57) **Abstract**

At the time when the detection unit 11 detects disconnection of a device, the judgement unit 14 controls the timing unit 12 to start measuring elapsed time since the detection. When the measured elapsed time reaches a predetermined time, the uninstall process of control software for the device is started. Further, the uninstall process includes a plurality of stages, and the judgement unit 14 executes each stage in response to the measured elapsed time. If the detection unit 11 detects reconnection of the device before the uninstall process has been completed, the judgement unit 14 stops the uninstall process and restores the control software and related information to the state before the uninstall process.

## Description

### BACKGROUND OF THE INVENTION

### (1) Field of the Invention

The present invention relates to an uninstall control apparatus for monitoring disconnection of a device from a system consisting of a master device and other devices and controlling an uninstall process of device control software, where the process is conducted by the master device in response to the disconnection.

### (2) Description of the Related Art

Conventionally, there is a usage form of hardware devices where a plurality of devices are connected as a system and one of the hardware devices as a master device controls the other devices. Such a system is realized by that the master device controls the other devices' operations such as starting/stopping, details of processes, and timing for the operations. To achieve this, the master device is equipped with control software which enables control of the other devices (hereafter called "control target devices or slave devices"). Installation of the control software onto the master device is often inputted from recording media or downloaded via communication means by user' s manual operations of the master device . However, a system in which connection/disconnection of a control target device triggers the master device to automatically perform such installation/uninstallation processes is becoming increasingly common.

As concrete examples of this kind of system, there are cases where (1) a personal computer (PC) and peripheral devices are connected with each other, and (2) audiovisual devices are connected with each other.

The peripheral devices in the first case (i.e., relating to PC) include a device equipped with a function of Plug & Play, which is now becoming pervasive. In the case of a notebook computer, for example, users can make use of a PCMCIA card simply by inserting the card into a slot provided within the computer. In this case, the notebook computer installs control software for the card onto itself at the time of insertion of the card. Conversely, on removing the card from the slot, the notebook computer detects the removal and uninstalls the control software for the card by itself. As another example, PCs install or uninstall control software for peripheral equipment connected with the PC via a USB cable in response to connection/disconnection of the cable as a trigger.

The aforementioned second case (i.e., relating to audiovisual devices) includes connection between devices both of which adhere to the Home Audio Video interoperability (HAVi) Specification. The HAVi Specification has been developed as the architecture of a home AV network and the Specification Ver. 1.0 is now available. The HAVi architecture enables a usage form where a plurality of devices conforming to the IEEE 1394 are connected and one of the connected devices controls the other devices' operations. Hereafter the whole of the connected plurality of devices and connection means such as a cable will be referred to as an "IEEE 1394 network" for the sake of convenience. In this network, a controlling device (master device) equipped with HAVi middleware is called Full AV device (FAV), while controlled devices are called Base AV devices (BAV).

When connecting a new BAV to the IEEE 1394 network, the FAV automatically acquires and installs control software for controlling the BAV (this software is called a Device Control Module (DCM)) from the storage unit inside the BAV or the Internet server. Conversely, when disconnecting a BAV from the network, the FAV automatically uninstalls the control software corresponding to the BAV.

However, as described above, installation/uninstallation of the control software is automatically executed simply based on the connection/disconnection of a device. Therefore, in the case that a user unintentionally and accidentally disconnects a device from the system and immediately connects the device again, uninstall/reinstall processes will be conducted in response to the disconnection and reconnection, respectively. Thus, the user has to wait for using the device until these processes have been completed. This problem becomes especially serious when software has to be downloaded via communication means, because the user has to wait longer to reinstall the software.

### SUMMARY OF THE INVENTION

In view of the aforementioned problem, the object of the present invention is to provide an uninstall control apparatus which controls a process for uninstalling control software, so that a user can use a device again without waiting for a long time simply by reconnecting the device to the system immediately, in the case that a user unintentionally disconnects a device.
(1) To achieve the object, the uninstall control apparatus according to the invention connected with a master device and for controlling a process for uninstalling control software from the master device, the control software being used by the master device for controlling one or more slave devices in a system consisting of the master device and the one or more of slave devices, the uninstall control apparatus is made up of: a timing unit for, if one of the slave devices is disconnected from the system, measuring elapsed time since the disconnection of the disconnected slave device; a timing control unit for controlling the timing for uninstalling control software for the disconnected slave device; and an uninstall unit for uninstalling the control software for the disconnected slave device under the control of the timing control unit, wherein the timing control unit controls the uninstall unit to start uninstalling, if the disconnected slave device is not reconnected to the system before the measured elapsed time reaches a first predetermined time.
   With this construction, the uninstall process is started after the predetermined time has passed since the detection unit detected the disconnection of the slave device. Therefore, even in the case where a user accidentally disconnects the slave device, the user can use the slave device again without delay simply by reconnecting the slave device to the system before the predetermined time has passed.
(2) In above (1), the disconnection/reconnection of the slave device from the system may be detected by a bus reset signal generated following the disconnection/reconnection.
   With this construction, the apparatus according to the invention becomes applicable not only to the cases such as physical disconnection of cables, but also to all of the cases where the master device cannot detect the other slave devices in response to generation of the bus reset signal.
(3) In above (1), the uninstall process executed by the uninstall unit may include a plurality of stages, and the timing control unit controls the uninstall unit to execute each of the plurality of stages in response to the elapsed time measured by the timing unit.
   With this construction, each stage of the uninstall process can be executed based on the elapsed time measured since the detection unit detected the disconnection of the slave device. As a result, it becomes possible to confirm more reliably whether the disconnection of the slave device is according to the user's intention or not.
(4) In above (3), the uninstall control apparatus may further include: a restoration unit for restoring data modified in the uninstall process. In such an apparatus, the timing control unit, when the reconnection of the slave device is detected before the uninstall unit completes the uninstall process, stops the uninstall process by the uninstall unit and gives the restoration unit an instruction to restore the data modified by the time when the reconnection is detected to a state before starting of the uninstall process.
   With this construction, in the case that the disconnected slave device is reconnected to the system during the uninstall process, the slave device becomes available simply by restoring the data modified by the time when the detection unit detects the reconnection to the state before starting of the uninstall process. Therefore, waiting time till the slave device becomes available again can be reduced as compared with the case where the uninstall process is executed as a single process.
(5) In above (4), the control software to be uninstalled may be described in an object-oriented language, the uninstall process executed by the uninstall unit may include a stage for unloading classes which was loaded at the time when the control software was installed, and the timing control unit may control the uninstall unit to unload the classes when the elapsed time reaches a second predetermined time.
   With this construction, in the environment where the control software is described in an object-oriented language such as Java, if the slave device is reconnected to the system before the classes of the control software being the target for the uninstall process is deleted, the slave device becomes available again without reloading the classes. Therefore, waiting time till the slave device becomes available again can be reduced by the time required for completing the reloading process as compared with the case where the classes are deleted immediately after starting of the uninstall process.
(6) In above (4), the uninstall process executed by the uninstall unit may include a stage for deleting registration information on the control software being the target for the uninstall process, the registration information being generated at the time when the control software was installed, and the timing control unit may control the uninstall unit to delete the registration information when the elapsed time reaches a third predetermined time.
   With this construction, if the slave device is reconnected to the system before the registration information on the control software being the target for the uninstall process is deleted, the slave device becomes available again without setting the registration information again. Therefore, waiting time till the slave device becomes available again can be reduced by the time required for completing setting the registration information again as compared with the case where the registration information is deleted immediately after starting of the uninstall process.
(7) In any one of above (4) to (6), the uninstall control apparatus may further include a storage unit for storing installed control software. In such an apparatus, the uninstall process executed by the uninstall unit may include a stage for deleting the control software being the target for the uninstall process from the storage unit, and the timing control unit may control the uninstall unit to delete the control software from the storage unit when the elapsed time reaches a fourth predetermined time.
   With this construction, if the slave device is reconnected to the system before the control software is deleted from the storage unit, the slave device becomes available again without storing the control software again. Therefore, waiting time till the slave device becomes available again can be reduced by the time required for storing the control software in the storage unit again as compared with the case where the control software is deleted immediately after starting of the uninstall process.
(8) In above (7), the uninstall control apparatus may further include an acquisition unit for acquiring control software and storing the control software in both auxiliary storage unit and the storage unit. In such an apparatus, the uninstall process executed by the uninstall unit may include a stage for deleting the control software from the auxiliary storage unit, and the timing control unit may control the uninstall unit to delete the control software from the auxiliary storage unit when the elapsed time reaches a fifth predetermined time.
   With this construction, if the slave device is reconnected to the system before the control software is deleted from the auxiliary storage unit, the slave device becomes available again simply by conducting a stage for transferring the control software from the auxiliary storage unit to the storage unit and following stages, so that there is no need for reacquiring the control software and storing it in the auxiliary storage unit. Therefore, waiting time till the slave device becomes available again can be reduced by the time required for reacquiring the control software as compared with the case where the control software is deleted from the auxiliary storage unit immediately after starting of the uninstall process. This advantage is especially effective for the case where the software has to be transferred from the remote server to the auxiliary storage unit.
(9) In above (3), the timing control unit may control the uninstall unit to execute each of the plurality of stages at a predetermined time set for the stage. Such an apparatus may further include an updating unit for updating the first predetermined time and at least one of the predetermined times set for the plurality of stages in accordance with external designation.
   With this construction, execution timings for the uninstall process and/or the plurality of stages in the uninstall process can be changed for the convenience of a user.
(10) In above (1), the uninstall control apparatus may further include an update information reception unit for receiving update information on control software. In such an apparatus, when the update information reception unit receives update information on control software and disconnection of the slave device corresponding to the control software is detected for the first time after receiving the update information, the timing control unit controls the uninstall unit to execute the uninstall process without controlling the process based on the elapsed time.
   With this construction, in the case that a user intentionally disconnects the slave device in order to download and install the latest version of the control software, the user does not need to wait longer for starting the install process of such software, while the object of the invention, i.e., to avoid unnecessary uninstallation/installation following unintended disconnection of a slave device, can be fulfilled.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
FIG. 1 shows the construction of a network A including a control apparatus according to one embodiment of the invention;
FIG. 2 shows the construction of the control apparatus according to the embodiment;
FIG. 3 shows one example of the construction and contents of the software management table according to the embodiment;
FIG. 4 shows class management information stored in the class management table according to the embodiment;
FIG. 5 shows one example of device list information stored in the detection unit according to the embodiment and the updated information, together with illustrations showing device connection both prior to and subsequent to the disconnection;
FIG. 6 shows a relation between the time lapsed since the control apparatus according to the embodiment detected disconnection of the device and the uninstall process conducted by the control apparatus; and
FIG. 7 is a flowchart showing the uninstall process by the control apparatus according to the embodiment.

### DESCRIPTION OF THE PREFERRED EMBODIMENT

The following describes an embodiment according to the control apparatus of the invention with reference to the drawings.

### (Introduction)

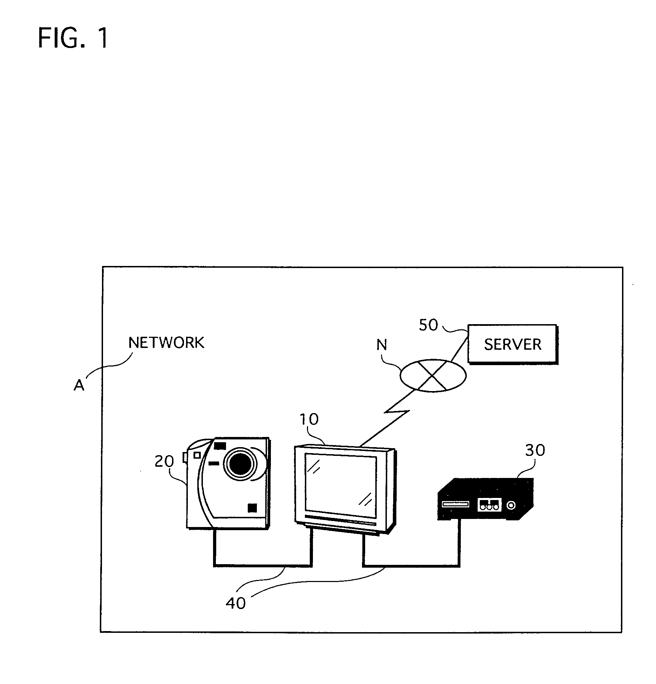

FIG. 1 shows a network A including a control apparatus according to the embodiment of the invention. The network A is constructed so that a plurality of devices each including a connection means conforming to the IEEE 1394 standard are connected with one another via cables 40 and the network adheres to the HAVi Specification. The connected devices include a TV receiver 10 equipped with a function as an FAV, a digital camera 20, a VTR deck 30, etc., as BAVs. The TV receiver 10 is further equipped with a communication means, which enables the TV receiver 10 to communicate with a server 50 via a public telephone network N. The control apparatus is included in the TV receiver 10 as the FAV.

The TV receiver 10 as the FAV acquires and holds (i.e., installs) control software programs for controlling the digital camera 20 and the VTR deck 30. Installation of the control software into the TV receiver 10 enables a user to operate other devices by means of the TV receiver 10. The TV receiver 10 acquires control software used for the digital camera 20 directly from the digital camera 20 and acquires control software used for the VTR deck 30 by downloading it from the server 50.

The control unit controls installation/uninstallation of the control software into/from the TV receiver 10. Note here that control software is described in Java (Java is a trademark of Sun Microsystems, Inc. in the U.S.).

Generally, installation is a process for acquiring software, generating registration information required for executing the software, converting the software into the executable object, and storing the software in the storage means. In this embodiment, however, the install process does not include the process for "generating registration information", because the control software is described in Java. Additionally, the process for converting the software into the executable object is replaced by the load process of classes included in the software.

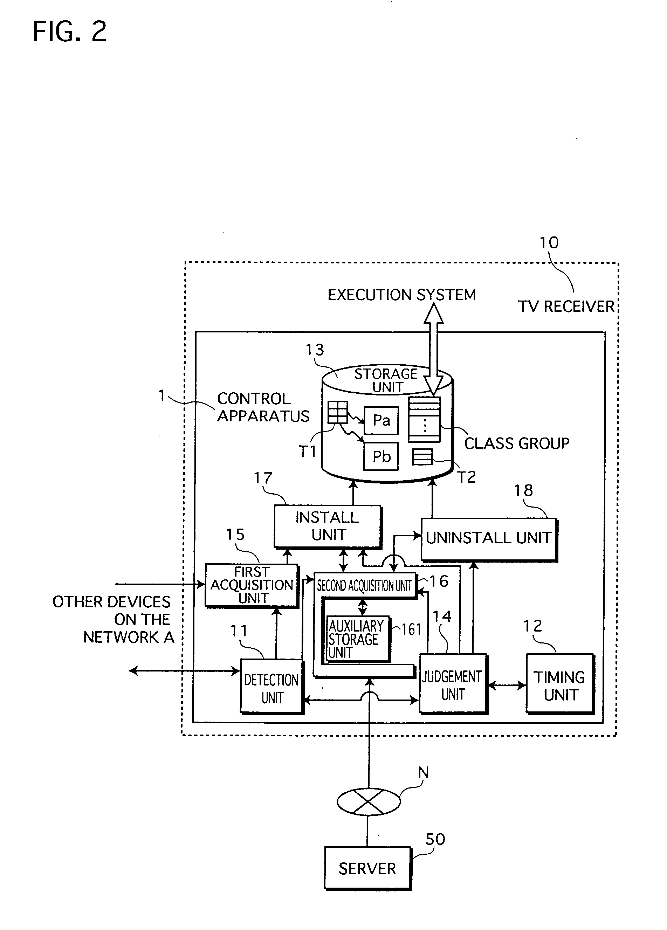

Therefore, the install process in this embodiment consists of two stages: (1) a process for acquiring device control software from outside and storing it in the storage means (in this case, a storage unit 13 in FIG. 2), and (2) a process for loading classes included in the control software into the storage unit (the storage unit 13 in FIG. 2). In the case that the control software is acquired from the server 50, however, the install process also includes a process (3) for temporarily keeping the compressed software acquired from the server 50 in the auxiliary storage means (an auxiliary storage means 161 in FIG. 2) before storing it in the storage means.

Meanwhile, uninstallation is a process for sequentially deleting software and classes stored in the storage means according to the installation process. In the case of the software acquired from the server 50, uninstallation also includes a process for deleting software from the auxiliary storage means.

The control apparatus installs the control software at the time when a device is connected to the network A. While, the control apparatus starts to uninstall the control software after a predetermined time period has passed since a device was disconnected from the network A. Further, the control apparatus divides the uninstall process into some stages and executes each stage with the passage of time after the device is disconnected. This enables the device which has accidentally disconnected from the system and then immediately connected thereto to be rapidly available again. Such an uninstall process is the feature of the control apparatus.

Note here that "disconnection" detected by the control apparatus according to this embodiment is not limited to the case where connecting cables are physically connected/disconnected, but includes all cases where the master device cannot detect its control target devices for some reason. For instance, assume that a system constructed so that a control target device A is connected to a master device B. If another control target device C is further connected to the system, then bus reset will take place. Immediately after the bus reset, the master device B might not detect the device A. However, immediately after such bus reset, another bus reset will take place, so that the master device becomes able to detect the device A again. Therefore, in this case, the time length when the device A is unable to be detected is extremely short. The control apparatus according to this embodiment is capable of controlling uninstallation/reinstallation of control software in response to such "disconnection" in the above-mentioned broad sense.

### (Construction of Control Apparatus)

FIG. 2 is a block diagram showing the construction of the control apparatus 1 according to this embodiment.

The control apparatus 1 includes a detection unit 11, a judgement unit 14, a first acquisition unit 15, a second acquisition unit 16, an install unit 17, and an uninstall unit 18. The detection unit 11 detects connection/disconnection of a device to/from a network A, which becomes a trigger for installation/uninstallation of software. The judgement unit 14 judges whether the installation/uninstallation is necessary for the connection/disconnection of the device, and controls the timing for executing the uninstallation. The first and second acquisition units 15 and 16 respectively acquires control software at the time of installation. The install unit 17 performs an install process, i.e., a process for storing software and related information into the storage unit 13, and a load process of classes included in the software. The uninstall unit 18 performs an uninstall process, i.e., a process for deleting software, related information, and classes from the storage unit 13. The control unit 1 further includes a timing unit 12 which operates under the judgement unit 14. Following describes main elements of these units in detail.

### (Storage Unit 13)

First, data stored in the storage unit 13 relating to the install process will be described.

The storage unit 13 stores control software Pa and Pb. Information on storage locations of these software (i.e., addresses of these software) is held in the software management table T1. Hereafter the information held in the software management table T1 is called "software management information".

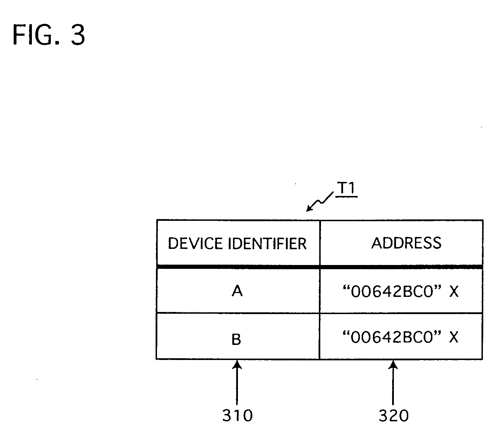

FIG. 3 shows one example of the construction and contents of the software management table T1. The software management table T1 consists of a device identifier field 310 and an address field 320. The device identifier field 310 stores identifiers identifying devices, while the address field 320 stores addresses in the storage unit 13 of control software for the device specified by the corresponding device identifier.

Software management information is added into the software management table T1 by the install unit 17 at the install process, while deleted by the uninstall unit 18 at the uninstall process.

In addition, at the install process, classes included in the software Pa and Pb are loaded into the storage unit 13. Further, a class management table T2 is also stored in the storage unit 13. In this table T2, information for distinguishing software whose classes have been loaded into the storage unit 13 is described.

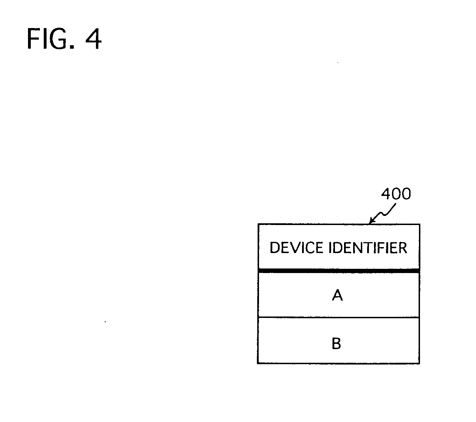

FIG. 4 shows class management information 400 stored in the class management table T2. The class management information 400 indicates control software whose classes have been loaded into the storage unit 13, by means of the device identifiers of the devices corresponding to the software (the device identifiers are the same as those stored in the software management table T1). FIG. 4 shows that classes included in the control software for devices corresponding to the identifiers "A" and "B" have been already loaded into the storage unit 13. These devices (i.e., classes included in the control software corresponding to the devices have been loaded into the storage unit 13) become controllable by the TV receiver 10 as the master device.

The install unit 17 loads classes and adds corresponding class management information into the class management table T2 at the install process, while the uninstall unit 18 deletes classes and corresponding class management information from the storage unit 13 at the uninstall process.

### (Detection unit 11)

The detection unit 11 detects connection/disconnection of devices to/from the network A. If a device is connected/disconnected to/from the network A, a bus reset signal is generated. The detection unit 11 detects the connection/disconnection with the signal. As previously described, generation of the bus reset signal is not limited to the case where devices are physically connected/disconnected to/from the network. Instead, if a bus reset signal is generated, the detection unit 17 always judges that connection/disconnection of devices occurred and performs the following processes.

On detecting a bus reset signal, the detection unit 11 transmits identifier transmission requests to all devices whose existence in the network A is detectable. In response to these requests, each device transmits its identifier to the detection unit 11. Then, the detection unit 11 checks the transmitted identifiers against a list of connected devices stored within itself, and judges that an identifier which is not included in the list indicates a reconnected device. Conversely, if the list includes the identifier which is not transmitted from the devices, the detection unit 11 judges that the device corresponding to the identifier has been disconnected from the network. Note here that an identifier is unique to each device and so capable of specifying the device.

In the case that the detection unit 11 judges that a device is a reconnected to the network, the detection unit 11 adds the identifier of the device in the list of connected devices. Conversely, in the case that the detection unit 11 judges that a device has been disconnected from the network, the detection unit 11 deletes the identifier of the device from the list.

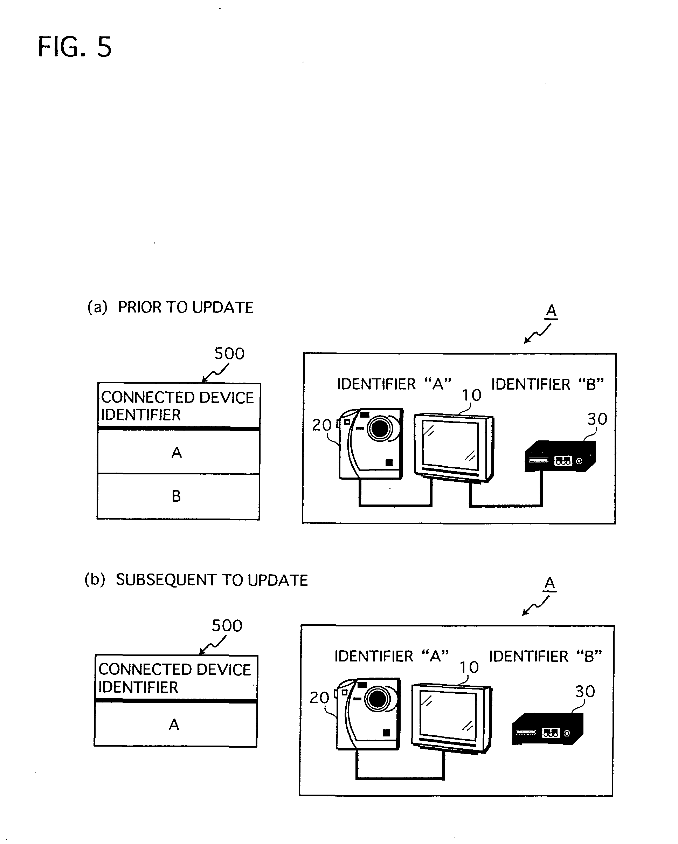

FIG. 5 shows one example of a device list 500 stored in the detection unit 11 and the updated list, together with illustrations showing the state of device connection both prior to and subsequent to the update. FIGS. 5 (a) and (b) show the state prior to and subsequent to the update, respectively. These drawings illustrate the state where two devices are connected to the TV receiver 10 (See FIG. 5(a)) and the updated state where the device B (VTR 30) with the identifier B is disconnected from the network (See FIG. 5(b)). In accordance with such a change, the device list 500 is updated as in FIG. 5(b).

Additionally, on detecting connection/disconnection of a device, the detection unit 11 gives instructions and make inquires to/from other units.

As for the case where a device is reconnected to the network, on detecting connection of the device, the detection unit 11 transmits the identifier of the connected device to the judgement unit 14 so as to inquire about whether installation of the control software for the device is necessary or not.

If the response from the judgement unit 14 is "not necessary", the detection unit 11 does not perform an install process. Such a situation (i.e., a situation where installation of the control software is not necessary for the connected device) applies to the case where a user reconnects the device which has been accidentally disconnected from the network before the control software for the device is uninstalled.

Conversely, if the response from the judgement 14 is "necessary", the detection unit 11 gives the first acquisition unit 15 or the second acquisition unit 16 instructions to acquire the control software for the device and transmit it together with the device identifier to the install unit 17. On receiving them, the install unit 17 stores the control software in the storage unit 13, while loading classes included in the software, generating the class management information, and storing them in the storage unit 13 (specifically, the class management information is stored in the class table T2).

As for the control software, there are two cases where control software is acquired from the device itself, and control software has to be downloaded from the server 50. Therefore, the detection unit 11 obtains information from the reconnected device on where to acquire the control software (i. e., directly from the device or from the server). In the former case, the detection unit 11 gives an acquisition instruction to the first acquisition unit 15, while, in the latter case, giving the instruction to the second acquisition unit 16.

As for the latter case, when acquiring the control software from the server 50, the second acquisition unit 16 transmits it to the install unit 17, while holding the same together with the management table in the auxiliary storage unit 161. This management table has the same construction as in the software management table T1 stored in the storage unit 13 (See FIG. 2), which consists of correspondences between storage addresses of the software in the auxiliary storage unit 161 and device identifiers corresponding to the software.

Alternatively, in the case that the detection unit 11 detects disconnection of a device, the detection unit 11 gives the judgement unit 14 an instruction to perform processes relating to uninstallation of the control software for the device.

### (Judgement Unit 14)

When the detection unit 11 detects connection/disconnection of a device, the judgement unit 14 judges whether installation of software is necessary for the connection, and judges whether uninstallation of software is necessary for the disconnection. Further, the judgement unit 14 controls a timing for executing the uninstall process based on the elapsed time measured by the timing unit 12.

First, the following describes the case where the judgement unit 14 is informed from the detection unit 11 that a device has been disconnected (i.e., the case of uninstall process). In this case, the judgement unit 14 makes the timing unit 12 measure the elapsed time after the disconnection, while proceeding with the uninstall process which has been divided into two or three stages in response to the elapsed time.

At the beginning of the uninstall process, the judgement unit 14 lists the device identifier received from the detection unit 11 in an uninstall device list which has been stored within the judgement unit 14. Then, the judgement unit 14 transmits a request for starting measurement to the timing unit 12 so as to start the timer. Every time the elapsed time reaches one of predetermined values, the timing unit 12 informs the judgement unit 14 of the elapsed time. Then, the judgement unit 14 proceeds with the uninstall process in response to the informed elapsed time.

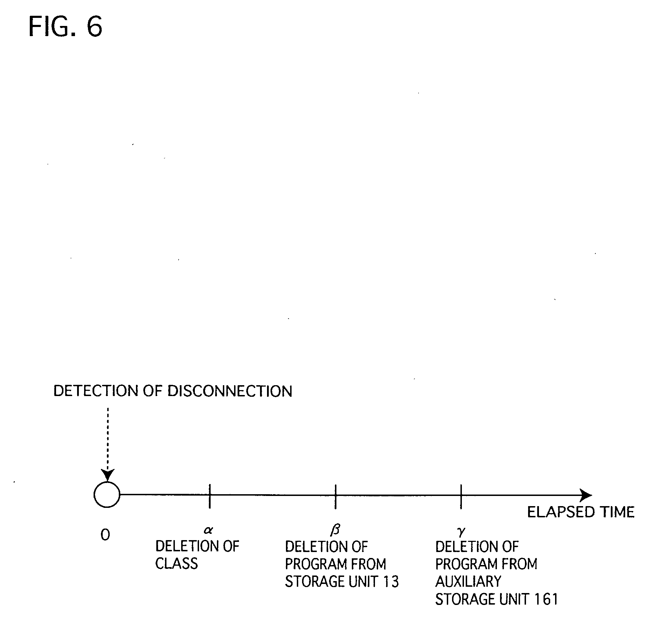

FIG. 6 shows the relation between the time lapsed since the control apparatus according to the embodiment detected disconnection of the device and the uninstall process.

As shown in this figure, the timing unit 12 informs the judgement unit 14 of the elapsed time three times in the uninstall process . The first elapsed time α indicates the timing for deleting (unloading) the classes of the software from the storage unit 13. The value of α is arbitrarily preset in the range from one to five seconds. The second elapsed time β indicates the timing for deleting the software and the corresponding software management information (stored in the software management table T1) from the storage unit 13. The value of β is arbitrarily preset in the range from one to ten minutes. The third elapsed time γ indicates the timing for deleting the software stored in the auxiliary storage unit 161 within the second acquisition unit 16. Note that γ is set only for the software acquired by the second acquisition unit 16. The value of γ is arbitrarily preset in the range from a few hours to a few days.

When the time of α has passed, the judgement unit 14 transmits the identifier of the device to be processed to the uninstall unit 18 so as to delete the classes and the class management information for the device from the storage unit 13.

After that, when the time of β has passed, the judgement unit 14 transmits the device identifier to the uninstall unit 18, so that the control software for the device and the software management information for the software are respectively deleted from the storage unit 13 and the software management table T1. In addition, at this time, the judgement unit 14 refers to the management table held by the second acquisition unit 16 so as to check whether the control software for the device is stored in the auxiliary storage unit 161 within the second acquisition unit 16. If the software is not stored therein, the judgement unit 14 judges that the uninstall process has been completed, then stops the measurement by the timing unit 12 and deletes the device identifier from the uninstall device list stored within itself. After that, if the device is connected to the network A again, the judgement unit judges it to be a reconnected device, and performs installation of the control software.

Alternatively, the control software for the device is stored in the auxiliary storage unit 161 also, the judgement unit 14 further proceeds with the uninstallation process. When the time of γ has passed, the judgement unit 14 transmits the device identifier to the second acquisition unit 16 so as to delete the control software for the device stored in the auxiliary storage unit 161. Then, the judgement unit 14 stops the timing unit 12 measuring the elapsed time and deletes the device identifier from the uninstall device list to complete the uninstall process.

Next, the following describes the process conducted by the judgement unit 14 in the case that connection of a device is detected (i.e., a process relating to judgement whether installation is necessary or not) . In this case, the judgement unit 14 judges whether the detected device is a newly added device or a device which has been disconnected just before the connection (i.e., a device now being in the uninstall process). To achieve this, the judgement unit 14 checks the identifier of the connected device informed by the detection unit 11 against the uninstall device list held by the judgement unit 14 itself. If the identifier is included in the list, the judgement unit 14 can judge the connection to be reconnection.

In the case of a newly added device (not reconnection) , the judgement unit 14 informs the detection unit 11 that the control software for the device has to be installed.

On the other hand, in the case of reconnection, the judgement unit 14 informs the detection unit 11 that installation is not necessary, while stopping the now being executed uninstall process of the control software for the device. More specifically, this process includes three steps for: (1) giving the timing unit 12 an instruction to stop measuring the elapsed time, (2) deleting the device identifier from the uninstall device list, and (3) only if the uninstall process proceeds halfway, restoring the installed information to the state before uninstallation. Among these steps, details of the step (3) varies based on the elapsed time until the uninstall process stops. Following describes the details based on the elapsed time.

In the case of the elapsed time "not shorter than α but shorter than β", the first step "deletion of the classes" in the uninstall process is being executed. Therefore, the judgement unit 14 transmits the device identifier to the install unit 17 so as to extract the classes from the control software (stored in the storage unit 13) for the device and load the classes into the storage unit 13. Further, the judgement unit 14 instructs the install unit 17 to add the class management information for the control software in the class management table T2.

In the case of the elapsed time "not shorter than β but shorter than γ", the second step "deletion of software from the storage unit 13" is being executed. (Note here that the uninstall process for the software except for ones acquired from the second acquisition unit 16 includes only the first and the second stage, so that the software will be processed as a newly installed software.) Then, the judgement unit 14 transmits the device identifier to the install unit 17 and gives the install unit 17 an instruction to reacquire the control software for the device stored in the auxiliary storage unit 161. In response to the instruction, the install unit 17 gives the second acquisition unit 16 an instruction to read the software from the auxiliary storage unit 161 to acquire the software. Then, the install unit 17 stores the software in the storage unit 13 and adds the corresponding software management information in the software management table T1. Further, the install unit 17 loads the classes included in the program into the storage unit 13 and adds the class management information for the software in the class management table T2.

### (Operations)

Next, operations executed by the control apparatus 1 for controlling uninstallation will be described with reference to a flowchart.

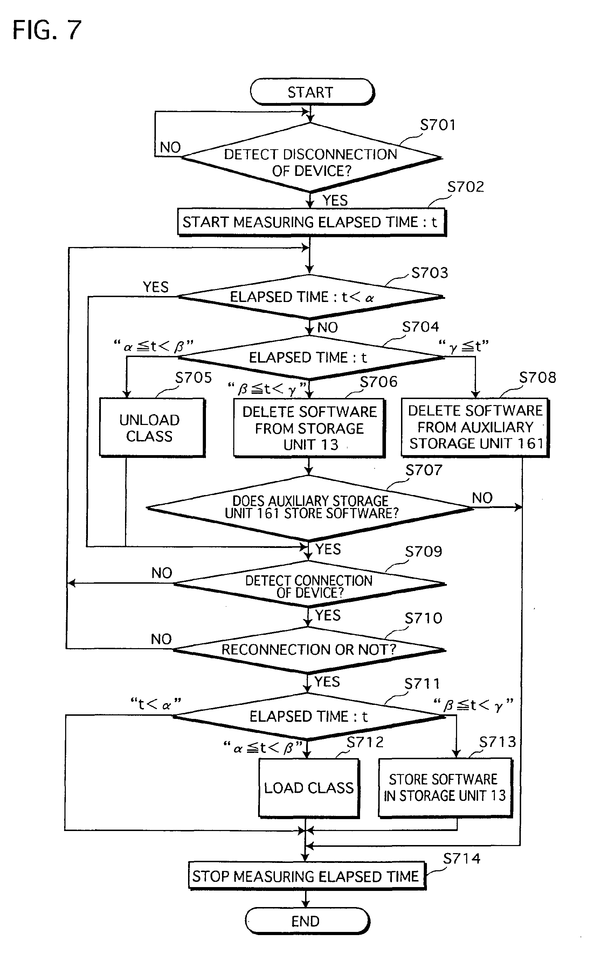

FIG. 7 is a flowchart showing the uninstall process by the control apparatus 1.

First, the uninstall process starts when the detection unit 11 detects bus reset and judges that the bus reset is due to disconnection of a device. The detection unit 11 informs the judgement unit 14 of the identifier of the disconnected device (S701: Yes).

The judgement unit 14 adds the device identifier in the uninstall device list, while gives the timing unit 12 an instruction to start measuring the elapsed time after disconnection of the device (S702).

After that, every time the elapsed time t becomes predetermined values (α, β, and γ), the timing unit 12 informs the judgement unit 14 as such. Then, the judgement unit 14 conducts the following processes in response to the elapsed time.

When the elapsed time t reaches α (S704: "α≦t < β), the judgement unit 14 gives the uninstall unit 18 an instruction to delete the classes and the class management information relating to the control software for the device from the storage unit 13 (S704).

When the elapsed time t reaches β (S704: β≦t< γ), the judgement unit 14 gives the uninstall unit 18 an instruction to delete the control software for the device and the software management information relating to the control software from the storage unit 13 and the software management table T1, respectively (S706). In addition, the judgement unit 14 checks whether the control software for the device is stored in the auxiliary storage unit 161 in the second acquisition unit 16 or not. In the case that the software is not stored therein (S707: No), the judgement unit 14 judges that the uninstall process has been completed, and so stops the timing unit 12 measuring the elapsed time and deletes the identifier of the device from the uninstall device list to complete the uninstall process (S714).

Alternatively, in the case that the control software for the device is stored in the auxiliary storage unit 161 also (S707: Yes), the judgement unit 14 further proceeds with the uninstallation process. At the time of γ (S704: γ≦t), the judgement unit 14 gives the second acquisition unit 16 an instruction to delete the control software for the device stored in the auxiliary storage unit 161 (S708). Further, the judgement unit 14 conducts the aforementioned step S714 to complete the uninstall process.

However, if the detection unit 11 detects that a device is connected to the network in the middle of above steps S704 to S708, the judgement unit 14 operates as follows.

In the middle of the uninstall process, on receiving a notification from the detection unit 11 that a device is connected (S709: Yes), the judgement unit 14 checks the identifier of the notified device against the uninstall device list held by the judgement unit 14 itself so as to judge whether the device now being in the uninstall process is reconnected or not. If the case is not reconnection (S710: No), the judgement unit 14 informs the detection unit 11 as such. Then, the detection unit 11 conducts the above-described install process (for giving the first acquisition unit 15 or the second acquisition unit 16 an instruction to acquire the control software for the reconnected device). As for the uninstall process being conducted for the device that the detection unit 11 detects the disconnection at the step S701, the process is continued. Meanwhile, in the case of reconnection (S710: Yes), the judgement unit 14 informs the detection unit 11 that installation is not necessary. In addition, if the uninstall process proceeds halfway, the judgement unit 14 gives the install unit 17 an instruction to conduct a process for restoring the information as described in the following steps S712 and S713.

In the case of the elapsed time "not shorter than α but shorter than β" (S711:α≦t <β), the judgement unit 14 gives the install unit 17 an instruction to load the classes included in the control software for the device which is kept in the storage unit 13 into the storage unit 13. Further, the judgement unit 14 instructs the install unit 17 to add the class management information for the control software in the class management table T2 (S712).

In the case of the elapsed time "not shorter than β but shorter than γ" (S711: β ≦t < γ), the judgement unit 14 gives the install unit 17 an instruction to reacquire the control software for the device. In response to the instruction, the install unit 17 gives the second acquisition unit 16 instructions to read the software from the auxiliary storage unit 161 and transmit it to the install unit 17. Then, the install unit 17 stores the software in the storage unit 13 and adds the corresponding software management information in the software management table T1. Further, the install unit 17 loads the classes included in the control software into the storage unit 13 and adds the class management information for the software in the class management table T2 (S713).

After finishing the steps S712 and S713, the judgement unit 14 performs the above-described step S714 to complete the process for reconnection.

Note here that in the case that the detection unit 11 detects reconnection of a device before the elapsed time reaches the predetermined time α (S703: Yes and S709: Yes) , neither the uninstall process such as for deleting classes nor the restoration process for the uninstallation is performed.

### (Summary)

As described above, on detecting disconnection of a device from the network A, the control apparatus 1 in this embodiment starts the uninstallation process of the control software for the device. However, until a predetermined time period has passed, the control apparatus 1 does not delete the software and information relating to the software. Furthermore, even after the predetermined time period, a plurality of stages of uninstall process is sequentially conducted every predetermined elapsed time. As a result, even if a user accidentally disconnect a device, reconnection immediately after the disconnection allows the user to use the device without delay and without waiting reinstallation of the control software, because the control software and related information is still kept within there. Further, even when some time period has passed before reconnection and the uninstall process of the control software proceeds halfway, waiting time till the device becomes available again can be reduced as compared with the case required for reinstallation of the software, because a portion of the software and related information is not deleted but still kept within the apparatus.

These advantages are especially effective for the cases where software has to be downloaded from the remote server and where bus reset frequently occurs as in the IEEE 1394 network.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

The above-described embodiment deals with an example where home electrical devices are connected on the IEEE 1394 network. However, connecting means and devices are not limited to such an example. That is, the invention is applicable to any usage forms insofar as the following two preconditions are satisfied: (1) in the environment where a plurality of devices are connected, a master device controls other devices' operations using control software, and (2) on detecting connection/disconnection of a device, the master device installs/uninstalls the control software for the device. For instance, devices may be connected via USB and other serial buses, or by radio conforming to the wireless IEEE 1394 standard. Also, the invention is applicable to the system including a PC as the master device and peripheral devices which are connected with each other. In addition, the control software is not necessarily described in Java.

In the above-described embodiment, the uninstall process includes three stages of "deletion of classes", "deletion of control software from the storage unit" and "deletion of control software from the auxiliary storage unit". However, this is just one example, and details of control software and the executed order of its stages vary with specifications of install/uninstall processes adopted by the device to be processed. For instance, there is a case where the install process requires generating system registration information on the software which becomes executable as a result of the install process so that the system can refer to the system registration information when executing the software. In such a case, a stage of deletion of information is included in the uninstall process.

The above embodiment describes control software so as to be limited to DCM, which is a program for controlling each device individually. However, control software according to the invention is not limited to the DCM, but includes programs (e.g., a program called "application module" which is used for controlling the DCM) which are automatically acquired from external apparatuses such as a remote server. Such programs include a program named "havlet" which performs interface processing including displaying GUI to receive a designation from a user and informing the DCM of the designation.

Recording media used as the auxiliary storage unit 161 may be RAMs or hard disks, or devices detachable to the control apparatus 1 such as removable hard disks and memory cards.

The above-described timing unit 12 may have a plurality of timers within it so as to measure the elapsed time regarding the plurality of disconnected devices simultaneously. In this case, management information on the correspondences between identifiers of the timers and device identifiers associated with the timers should be stored in the unit.

In the above-described embodiment, the predetermined time α, β, and γ are preset. However, users may set these time freely or these preset times may be changed according to user's designation. Further, although the above-described embodiment uniformly applies a set of the predetermined time to all devices, a set of values of time may be set so as to be specific to each device.

In this case, the uninstall control apparatus 1 should be further provided with a reception unit for receiving values of the predetermined time α, β, and γ from a user, and the received values are transmitted to the judgement unit 14. The judgement unit 14 stores these values and refers to them in the judgement process.

With this construction, a user can set the predetermined time α, β, and γ so that starting timing of each stage in the uninstall process (for each device, if required) can be freely determined based on the system environment. Moreover, this construction is convenient when a user intentionally connects/disconnects a device to/from the system. For instance, there is a case where a user obtains update information on control software for a device. In order to uninstall the old version and install the latest version from the server, the user intentionally disconnects the device from the system. According to the above-mentioned embodiment, however, the user has to wait for reconnecting the device until the time of β or γ has passed after disconnection of the device so as to install the latest version. On the other hand, with this construction, a user can set the predetermined time α, β, and γ for each device. Therefore, if all of the predetermined time α, β, and γ are set at "0" before disconnection and then the device is disconnected, the requested latest version can be installed immediately. After that, the values of α, β, and γ should be returned to the original values, which avoids unnecessary uninstallation/reinstallation if a user accidentally disconnects the device.

Alternatively, in the case that update information on the control software is transmitted from the server via communication means, the judgement unit 14 may acquire the update information via the second acquisition unit 16 and apply zero for the values of α, β, and γ only when the device relating to the update information is disconnected for the first time after acquiring the information. With this construction, the control software in the latest version can be installed without the user's trouble of setting these values. To achieve this, the judgement unit 14 should store the original values of α, β, and γ so as to return the changed values to original ones, and store a flag or a counter so as to apply zero for these values only once. More specifically, at the time when the update information is received, the flag is set from OFF to ON, and the values of the predetermined time α, β, and γ regarding to the device are set at zero. When disconnection of the device is detected, the judgement unit 14 instructs the uninstall unit to execute the uninstall process according to the predetermined time (in this case "0"). In addition, when disconnection is detected, the judgement unit 14 refers to the flag. In the case of the flag being ON, the device's identifier is not added into the uninstall device list. With this procedure, when reconnection of the device is detected, the judgement unit 14 immediately gives the install unit an instruction of reinstallation. Then, after the install process, the judgement unit refers to the flag again. In the case of the flag being ON, the values of α, β, and γ are returned to the stored original values and the flag is returned to OFF.

Unlike the above procedure where the values of α, β, and γ are set at zero and returned to the original values, other procedure may be adopted, where if the flag is ON , the judgement unit 14 does not control the uninstall process based on the elapsed time. In this case, the process is conducted as follows. ON/OFF state of the flag is set by the detection unit. In the case of the flag being ON, the detection unit gives the uninstall unit an instruction to execute the uninstall process. After the uninstall process, in the case of reconnection (and in the case of the flag being ON), the detection unit does not inform the judgement unit of the reconnection, but gives the install unit an instruction to execute the install process. On the other hand, in the case of the flag being OFF, the control apparatus performs the same process as in the above-described embodiment. In this case, the uninstall/install units have to inform the detection unit that the process has been completed (for determining a timing for starting the install process and setting the flag OFF).

## Claims

1. An uninstall control apparatus connected with a master device and for controlling a process for uninstalling control software from the master device, the control software being used by the master device for controlling one or more slave devices in a system consisting of the master device and the one or more of slave devices, the uninstall control apparatus comprising:
timing means for, if one of the slave devices is disconnected from the system, measuring elapsed time since the disconnection of the disconnected slave device;
timing control means for controlling the timing for uninstalling control software for the disconnected slave device; and
uninstall means for uninstalling the control software for the disconnected slave device under the control of the timing control means, wherein
the timing control means controls the uninstall means to start uninstalling, if the disconnected slave device is not reconnected to the system before the measured elapsed time reaches a first predetermined time.

2. The uninstall control apparatus of Claim 1, wherein the disconnection/reconnection of the slave device from the system is detected by a bus reset signal generated following the disconnection/reconnection.

3. The uninstall control apparatus of Claim 1, wherein
the uninstall process executed by the uninstall means includes a plurality of stages, and
the timing control means controls the uninstall means to execute each of the plurality of stages in response to the elapsed time measured by the timing means.

4. The uninstall control apparatus of Claim 3 further comprising:
restoration means for restoring data modified in the uninstall process, wherein
the timing control means, when the reconnection of the slave device is detected before the uninstall means completes the uninstall process, stops the uninstall process by the uninstall means and gives the restoration means an instruction to restore the data modified by the time when the reconnection is detected to a state before starting of the uninstall process.

5. The uninstall control apparatus of Claim 4, wherein
the control software to be uninstalled is described in an object-oriented language,
the uninstall process executed by the uninstall means includes a stage for unloading classes which was loaded at the time when the control software was installed, and
the timing control means controls the uninstall means to unload the classes when the elapsed time reaches a second predetermined time.

6. The uninstall control apparatus of Claim 4, wherein
the uninstall process executed by the uninstall means includes a stage for deleting registration information on the control software being the target for the uninstall process, the registration information being generated at the time when the control software was installed, and
the timing control means controls the uninstall means to delete the registration information when the elapsed time reaches a third predetermined time.

7. The uninstall control apparatus as defined in any one of Claims 4 to 6 further comprising:
storage means for storing installed control software, wherein
the uninstall process executed by the uninstall means includes a stage for deleting the control software being the target for the uninstall process from the storage means, and
the timing control means controls the uninstall means to delete the control software from the storage means when the elapsed time reaches a fourth predetermined time.

8. The uninstall control apparatus of Claim 7 further comprising:
acquisition means for acquiring control software and storing the control software in both auxiliary storage means and the storage means, wherein
the uninstall process executed by the uninstall means includes a stage for deleting the control software from the auxiliary storage means, and
the timing control means controls the uninstall means to delete the control software from the auxiliary storage means when the elapsed time reaches a fifth predetermined time.

9. The uninstall control apparatus of Claim 3, wherein
the timing control means controls the uninstall means to execute each of the plurality of stages at a predetermined time set for the stage, wherein
the uninstall control apparatus further comprises:
updating means for updating the first predetermined time and at least one of the predetermined times set for the plurality of stages in accordance with external designation.

10. The uninstall control apparatus of Claim 1 further comprising:
update information reception means for receiving update information on control software, wherein
when the update information reception means receives update information on control software and disconnection of the slave device corresponding to the control software is detected for the first time after receiving the update information, the timing control means controls the uninstall means to execute the uninstall process without controlling the process based on the elapsed time.

11. A method for controlling a process for uninstalling control software from a master device, the control software being used by the master device for controlling one or more slave devices in a system consisting of the master device and the one or more of slave devices, the method comprising the steps of:
a detection step for detecting disconnection of a slave device from the system;
a timing step for measuring elapsed time since disconnection of the disconnected slave device is detected in the detection step; and
an uninstall step for uninstalling control software for controlling the disconnected slave device, the uninstall step being started, if reconnection of the disconnected slave device is not detected before the measured elapsed time reaches a first predetermined time.

12. The method for controlling the uninstall process of Claim 11, wherein
the uninstall step includes a plurality of stages, and
each of the plurality of stages are executed when the elapsed time reaches a predetermined time preset for the stage.

13. The method for controlling the uninstall process of Claim 12, further comprising:
a restoration step for, when reconnection of the disconnected slave device is detected during the uninstall step, stopping the uninstalling and restoring the data modified in the stages having been executed by the time when the reconnection is detected to a state before starting of the uninstalling.

14. A computer-readable recording medium which records a program used in an uninstall control apparatus connected with a master device and for controlling a process for uninstalling control software from the master device, the control software being used by the master device for controlling one or more slave devices in a system consisting of the master device and the one or more of slave devices, the program comprising:
a detection step for detecting disconnection of a slave device from the system;
a timing step for measuring elapsed time since disconnection of the disconnected slave device is detected in the detection step; and
an uninstall step for uninstalling control software for controlling the disconnected slave device, the uninstall step being started, if reconnection of the disconnected slave device is not detected before the measured elapsed time reaches a first predetermined time.

15. The computer-readable recording medium of Claim 14, wherein
the uninstall step includes a plurality of stages, and
each of the plurality of stages are executed when the elapsed time reaches a predetermined time preset for the stage.

16. The computer-readable recording medium of Claim 15, the program recorded on the recording medium further comprising:
a restoration step for, when reconnection of the disconnected slave device is detected during the uninstall step, stopping the uninstalling and restoring the data modified in the stages having been executed by the time when the reconnection is detected to a state before starting of the uninstalling.
